**Europäisches Patentamt**

**European Patent Office**

**Office européen des brevets**

(11) Publication number : **0 366 172 B1**

# EUROPEAN PATENT SPECIFICATION

(45) Date of publication of patent specification :
**11.03.92 Bulletin 92/11**

(51) Int. Cl.⁵ : **B23K 9/00**

(21) Application number : **89202515.6**

(22) Date of filing : **06.10.89**

(54) **Hole weld member.**

(30) Priority : **13.10.88 NL 8802523**

(43) Date of publication of application :
**02.05.90 Bulletin 90/18**

(45) Publication of the grant of the patent :
**11.03.92 Bulletin 92/11**

(84) Designated Contracting States :
**BE CH DE FR GB IT LI LU NL**

(56) References cited :
**FR-A- 2 231 573**

(73) Proprietor : **Yokogawa Europe B.V.**
**Radiumweg 30**
**NL-3812 RA Amersfoort (NL)**

(72) Inventor : **Tesson, Adelbert Hermanus**
**Reigerstraat 32**
**NL-3816 AX Amersfoort (NL)**

(74) Representative : **de Wit, Gerard Frederik, Ir. et al**
**Octrooi- en Merkenbureau De Wit B.V.**
**Breitnerlaan 146**
**NL-2596 HG Den Haag (NL)**

# Description

When mounting an electrode or a measuring sensor in the wall of a vessel, the difficulty occurs that such an electrode or sensor often has to be oriented in an angle of 10 - 20° preferably 15° with respect to the horizontal.

If the electrode has been mounted in a sleeve, which sleeve is welded in the wall of a reaction vessel of mostly stainless steel, the difficulty occurs, that the sleeve should not be perpendicular to the wall if the wall is vertical, which normally is the case. This means an elliptical hole for accommodating a cylindrical sleeve necessitating to drill obliquely, which is rather difficult and time consuming. A still greater disadvantage is, that with welding the sleeve in the wall a deformation of the sleeve may occur by reason of which it has again to be remachined internally in situ.

The invention aims to provide a hole weld member, which eliminates these difficulties and further makes it possible to apply a circular weld, wherewith the bore in the wall may be a simple non-oblique bore.

According to the invention the above aims are attained by using a hole weld member as defined in claim 1.

Herewith it is possible that the oblique orientation of the sleeve has no influence on the shape of the weld between the hole weld member and the wall of the reaction vessel.

It is remarked that in FR-A-2.231.573 a connection member to be welded to a multi-layer pressure vessel is described, which member has an oblique tubular part. The problem solved by this connection member is to comply with tensions due to the welding and the pressure in the vessel in case of a multi-layer pressure vessel.

Preferably it is provided that the outer rim of the disc forms a circular cylinder surface. This enables the use of a straight cylindrical hole in the wall, whereas also the shape of the hole weld member and its manufacturing is simple.

In order to obtain a smooth surface of the vessel wall adjacent the opening of the bore it may be provided that at the vessel's side of the hole weld member its surface between the disc and the opening of the bore is spherical.

In this respect it is remarked that with welding of an oblique sleeve from practice it was known to obtain an opening of the bore in a plane perpendicular to the bore by grinding the sleeve and the adjacent portion of the wall after welding the sleeve into the wall. When using the above preferred embodiment of the invention the same result is obtainable without further milling on the spot.

At the side diverted from the wall the hole weld member has preferably also a thickening, so that in fact a body is formed which as a whole is thick, which enables to prevent with certainty that welding stresses induce a deformation of the bore.

From a manufacturing view-point it is simple that the thick body at least at one side is limited by a body which is axially symmetric with respect to the centre line of the disc. This can be realized by mounting a work piece from which the hole weld member has to be made such that it can rotate about a first centre line, which after milling is the centre line of the disc.

Next the said work piece can be mounted for rotating about another centre line, which after milling is the centre line of the bore, after which the hole weld member can be provided with screw-thread to enable an easy connection to further mounting means for an electrode holder or such like.

A further advantage of the hole weld member of the invention is, that the distance between the weld and the bore can be kept larger than with obliquely welding a sleeve, the distance between the outer rim of the disc and the bore being preferably more than 1 cm.

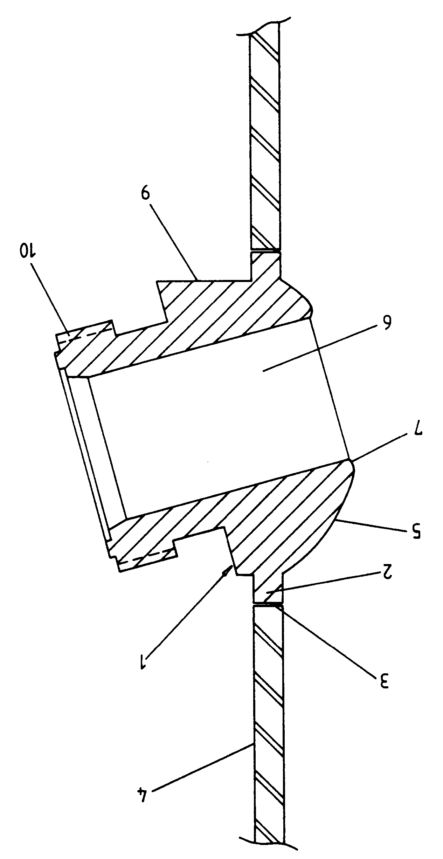

The invention in the following is further elucidated with reference to the drawing, in which a cross-section through a hole weld member according to the invention has been shown.

The hole weld member 1 has at its circumference a flange portion or disc 2 having a cylindrical outer wall part 3. This wall part can be fixed by means of welding to a wall 4 of for instance stainless steel.

The hole weld member has at its front side a spherical surface 5 and a bore 6 including an angle of 15° with the normal to the plane of wall 4. At the joint between the spherical surface 5 and the bore 6 a small gradual recess 7 is present, but this is no essential part of the invention. An advantage, which can easily be obtained (for instance by letting the centre line of the bore contain the centre of the sphere) is that the plane of the mouth of the bore 6 can be circular and perpendicular to the centre line of the bore. This enables to have a gasket or sealing member of an electrode holder or suchlike member everywhere in the same position with respect to the end edge of the bore.

The hole weld member has further at its side diverted from the vessel a cylindrical portion 9 having as centre line that of disc 2. Such a portion can easily be made by mounting the hole weld member on a lathe or suchlike with rotation about the centre line of disc 2 and turning it.

The part of the hole weld member further away from the vessel is preferably milled in axial symmetry with respect to the bore 6.

In order to be able to mount to the hole weld member a sleeve for receiving an electrode holder or suchlike, the hole weld member is provided with external screw-thread 10, on which a mounting nut can be screwed for fixing said sleeve.

Experience has shown that with welding a hole weld member in the wall no deformation at all of the cylinder wall of bore 6 occurs, so that refinishing thereof is not necessary.

The hole weld member according to the invention provides the possibility of a considerable work saving and a better guaranty of the shape of the bore 6 as well as the possibility of an opening plane of the bore, which is perpendicular to the centre line of the bore without needing additional grinding activities.

**Claims**

1. Hole weld member for exchangeably mounting an electrode or sensor in the wall of a reaction vessel, said hole weld member being provided with a bore (6) for receiving said electrode or sensor, characterized in that said hole weld member has the shape of a circular disc (2) and in that the bore (6) is obliquely oriented with respect to said disc.

2. Hole weld member according to claim 1, characterized in that the outer rim (3) of the disc (2) forms a circular cylinder surface.

3. Hole weld member according to claim 1 or 2, characterized in that at the vessel's side of the hole weld member its surface (5) between the disc (2) and the opening (7) of the bore (6) is spherical.

4. Hole weld member according to one or more of the preceding claims, characterized in that the disc (2) has a thickness of 3-7 mm.

5. Hole weld member according to one or more of the preceding claims, characterized in that the disc (2) forms a flange on a considerably thicker body (1,5,9).

6. Hole weld member according to claim 5, characterized in that the thicker body (1,5,9) at least at one side is limited by a surface (5) which is axially symmetrical with respect to a centre line perpendicular to the disc (2).

7. Hole weld member according to claim 6, characterized in that at the other side (10) diverted from the opening of the bore (6) it is axially symmetrical with respect to the centre line of the bore (6).

8. Hole weld member according to claim 7, characterized in that at the side (10) diverted from the opening of the bore it is provided with screw thread (10).

9. Hole weld member according to one or more of the preceding claims, characterized in that the distance between the outer rim (3) of the disc (2) and the surface of the bore (6) is larger than 1 cm.

10. Hole weld member according to any of the preceding claims, characterized in that at the one side it is axially symmetrical with respect to the centre line of the disc (2) and at the other side with respect to the centre line of the bore (6).

**Patentansprüche**

1. Lochschweissteil für die verwechselbare Anordnung einer Elektrode oder eines Fühlers in der Wand eines Reaktionsgefässes, welcher Lochschweissteil mit einer Bohrung (6) versehen ist um die Elektrode oder der Fühler aufzunehmen, **dadurch gekennzeichnet**, dass der genannte Lochschweissteil die Form einer kreisförmigen Scheibe (2) hat und dass die Bohrung (6) schräg zur genannten Scheibe orientiert ist.

2. Lochschweissteil nach Anspruch 1, **dadurch gekenzeichnet,** dass der aussere Rand (3) der Scheibe (2) eine Kreiszylinderfläche bildet.

3. Lochschweissteil nach Anspruch 1 oder 2, **dadurch gekennzeichnet**, dass an der Gefässseite des Lochschweissteils seine Oberfläche (5) zwischen der Scheibe (2) und der Mündung der Bohrung (6) sphärisch ist.

4. Lochschweissteil nach einem oder mehreren der vorangehenden Ansprüchen, **dadurch gekennzeichnet**, dass die Scheibe (2) eine Dicke von 3-7 mm hat.

5. Lochschweissteil nach einem oder mehreren der vorangehenden Ansprüchen, **dadurch gekennzeichnet**, dass die Scheibe (2) eine Flansche bildet auf einem erheblich dickeren Körper (1,5,9).

6. Lochschweissteil nach Anspruch 5, **dadurch gekennzeichnet** dass der dickere Körper (1,5,9) wenigstens an einer Seite begrenst wird durch eine Oberfläche (5) die axial symmetrisch ist hinsichtlich einer Achsenlinie senkrecht der Bohrung (6).

7. Lochschweissteil nach Anspruch 6, **dadurch gekennzeichnet**, dass er an der anderen von der Mündung der Bohrung (6) abgewanndten Seite (10) axial symmetrisch ist hinsichtlich der Achsenlinie der Bohrung (6).

8. Lochschweissteil nach Anspruch 7, **dadurch gekennzeichnet**, dass er an der von der Mündung der Bohrung (6) abgewandten Seite (10) mit Schraubengewinde (10) versehen ist.

9. Lochschweissteil nach einem oder mehreren der vorangehenden Ansprüchen, **dadurch gekennzeichnet**, dass die Entfernung zwischen dem ausseren Rand (3) der Scheibe (2) und der Oberfläche der Bohrung (6) grösser als 1 cm ist.

10. Lochschweissteil nach einem der vorangehenden Ansprüchen, **dadurch gekennzeichnet**, dass er an einer Seite axial symmetrisch ist hinsichtlich der Achsenlinie der Scheibe (2) und an der anderen Seite hinsichtlich der Achsenlinie der Bohrung (6).

**Revendications**

1. Elément support soudé pour le montage d'une électrode ou d'un capteur interchangeable dans la paroi d'une cuve à réaction, ledit élément support soudé comportant un alésage (6) pour recevoir ladite électrode ou ledit capteur, caractérisé en ce que ledit élément support soudé a la forme d'un disque circulaire (2) et en ce que l'alésage (6) est orienté en oblique par rapport audit disque.

2. Elément support soudé selon la revendication 1, caractérisé en ce que le bord extérieur (3) du disque (2) forme une surface cylindrique circulaire.

3. Elément support soudé selon la revendication 1 ou 2, caractérisé en ce que, du côté cuve de l'élément support soudé, la surface (5) entre le disque (2) et l'ouverture (7) de l'alésage (6) est sphérique.

4. Elément support soudé selon l'une ou plusieurs des revendications précédentes, caractérisé en ce que le disque (2) a une épaisseur de 3 à 7 mm.

5. Elément support soudé selon l'une ou plusieurs des revendications précédentes, caractérisé en ce que le disque (2) forme une bride sur une pièce nettement plus épaisse (1, 5, 9).

6. Elément support soudé selon la revendication 5, caractérisé en ce que la pièce plus épaisse (1, 5, 9) au moins d'un côté est limitée par une surface (5) possédant une symétrie axiale par rapport à un axe central perpendiculaire au disque (2).

7. Elément support soudé selon la revendication 6, caractérisé en ce que, de l'autre côté (10) opposé à l'ouverture de l'alésage (6) il possède une symétrie axiale par rapport à l'axe central de l'alésage (6).

8. Elément support soudé selon la revendication 7, caractérisé en ce que sur la face éloignée de l'ouverture de l'alésage est formé un filet (10) de vis.

9. Elément support soudé selon l'une ou plusieurs des revendications précédentes, caractérisé en ce que la distance entre le bord extérieur (3) du disque (2) et la surface de l'alésage (6) dépasse 1 cm.

10. Elément support soudé selon l'une quelconque des revendications précédentes, caractérisé en ce que, sur la première face, il possède une symétrie axiale par rapport à l'axe central du disque (2) et sur l'autre face une symétrie axiale par rapport à l'axe central de l'alésage (6).